# EUROPEAN PATENT APPLICATION

(11) **EP 4 406 706 A1**
(43) Date of publication of application: **31.07.2024**
(21) Application number: 22873265.7
(22) Date of filing: 16.09.2022
(51) Int. Cl.: B25J 5/00, B62D 63/02, G05D 1/02

(54) **ROBOTIZED CARGO VEHICLE**

(30) Priority: 23.09.2021 RU 2021127958
(71) Applicant: Obshchestvo s Ogranichennoi Otvetstvennostiu "Evokargo", Moscow, 129085 (RU)
(72) Inventor: BOLSHAKOV, Andrej Sergeevich, Moscow, 125363 (RU); FEDICHEV, Ilja Mihajlovich, Moscow, 117513 (RU); KOVALENKO, Vladimir Aleksandrovich, Moscow, 129090 (RU); ZHIRNOV, Ivan Vladimirovich, Moscow, 127543 (RU); TARASOV, Sergej Fedorovich, Moscow, 109652 (RU); SHIPITKO, Oleg Sergeevich, Moskovskij, 108811 (RU)
(74) Representative: Plasseraud IP
(86) International application number: PCT/RU2022/000280
(87) International publication number: WO 2023/048592

(57) **Abstract**

The invention relates to the field of robotics. A robotized cargo vehicle comprises a frame, a passive and an active driving chassis, a rechargeable battery, an inverter, an electric motor, and a reduction drive. The frame has an upwardly extending part, to which the housing of a service equipment module is fastened. Fastened in the front lower part of the housing are two ultrasound sensors. Fastened in the upper part of the housing is an optical stereo camera unit and two pneumatic cleaning nozzles and two hydraulic cleaning nozzles, oriented toward the optical stereo camera unit. Fastened to each upper side part of the housing is an optical rearview camera that is oriented at an angle away from the longitudinal axis of the robotized cargo vehicle. Fastened in each lower side part of the housing is an ultrasound sensor. Fastened inside the housing is an onboard control computer and a controller. Fastened to the rear lower part of the frame are an optical stereo camera unit and two ultrasound sensors, the rear upper part of the frame being provided with a protective ledge for protecting said optical stereo camera unit agains

## Description

The utility model relates to the field of robotics, and namely to robotized vehicles of industrial, transport, road construction, military and agricultural robots.

An automated logistics robot is known from the prior art, the robot comprising an all-body with an accumulator battery pack, the all-body being connected to a navigation controller and a storage device, a passive and a driven active chassis. Furthermore, the navigation controller is made in the form of a microprocessor connected to a broadband sensor for measuring the terrestrial magnetic field, wherein the microprocessor is configured to compare a current value of the magnetic field with a value recorded in the storage device, determine a deviation of the current value of the magnetic field from the value recorded in the storage device, and control the automated logistics robot on the basis of the determined deviation. The automated logistics robot further comprises a computer vision camera connected to the navigation controller, and also further comprises a laser security system connected to the navigation controller and configured to scan the space around the robot and determine surrounding obstacles, their dimensions, an azimuth, and a distance to them (Patent RU 170172 U1, 18.04.2017).

The main shortcoming of this technical solution is the ability to move only along pre-recorded routes; the computer vision system, as a part of this analogous prior-art solution, is intended only for reading barcodes identifying sections of the route. As a consequence, this technical solution can not be used on public roads.

A system and a method for enabling an autonomous vehicle to track a desired path, plan a continuous path to return to the desired path when the vehicle deviates from the desired path are known from the prior art. The continuous path is determined on the basis of a vehicle position, the desired path, and a lookahead distance. A pre-specified distance is the distance to the desired path, within which the continuous path and the desired path converge. The lookahead distance may vary depending on a vehicle speed. In one embodiment of the present invention, the continuous path is defined as a quintic polynomial (US 5684696 A, 04.11.1997).

The technical solution disclosed in the aforementioned information source is an integrated vehicle positioning and navigation system that is used everywhere and overcomes many of the limitations that are inherent in the conventional technology in the positioning and navigation field, thereby enabling highly accurate and autonomous vehicle positioning and navigation.

The main shortcoming of this technical solution is the ability to move only along pre-recorded routes using the navigation system; the computer vision system, as a part of this analogous prior-art solution, is intended only for determining the distance to the optimal route when deviating from the specified route. As a consequence, this technical solution can not be used on public roads.

A technical solution is known from the prior art, which provides a system for guiding an automated guided vehicle. The system includes a guidance path, the guided vehicle, an image capturing apparatus, and an operation unit. The navigation path guides the vehicle. The guided vehicle moves along the navigation route and is oriented along the same, moving within the vision guidance region after being departed from the guidance route. The image capturing apparatus captures a vision guidance region associated image. The vision guidance region associated image at least comprises an image of the vision guidance region. The operation unit determines whether the guided vehicle is departed from the guidance path and calculates location information of the guided vehicle in the vision guidance region. When the guided vehicle is departed from the guidance route, the operation unit guides the guided vehicle according to the vision guidance region associated image (US 9207676 B2, 08.12.2015).

The main shortcoming of this technical solution is the inability to detect obstacles in the blind spot of the image capturing apparatus, which can lead to the creation of an emergency situation when the guided vehicle is moving. The installation of the image capturing apparatuses is usually carried out at the highest point of the vehicle in order to ensure the maximum viewing angle.

However, such an arrangement of the capturing apparatuses reduces the viewing angle directly in front of the vehicle.

Furthermore, in order to ensure the normal operation, said video systems must transmit an image to the control unit without any graphical defects caused by possible dirtying of the optical lenses included in the structure of the video system, since they may become dirty during the operation of the guided vehicle, which has an adverse effect on the movement of the guided vehicle, visible noises may be created, which will be perceived by the control unit as obstacles.

The problem to be solved by the claimed utility model is providing a robotized cargo vehicle device that would not have the shortcomings of the available prior art.

The technical result to be achieved by the claimed utility model consists in ensuring the possibility of safe movement of the robotized cargo vehicle through the simultaneous use of information received from a computer vision unit with the exception of incorrect information received from the computer vision unit due to its dirtying and from ultrasonic sensors.

The claimed technical result is achieved due to the fact that the robotized cargo vehicle is characterized by comprising a frame, a passive and a driven active chassis, an accumulator battery, an inverter, an electric motor and a reduction gearbox, wherein the frame is made with a vertically elevated portion, on which a service equipment module body made of a radioparent material is rigidly fastened, two ultrasonic sensors are mounted in a front lower portion of the body, and a unit of optical stereo cameras directed in a direction of travel and two cleaning pneumatic nozzles and two cleaning hydraulic nozzles directed at the unit of optical stereo cameras are mounted in an upper portion of the body on the frame, wherein an optical rear-view camera directed at an angle from a longitudinal axis of the robotized cargo vehicle is mounted on each lateral upper portion of the body, and one ultrasonic sensor is mounted in each lateral lower portion of the body, wherein an on-board control computer and a controller are mounted inside the body, a unit of optical stereo cameras and two ultrasonic sensors are mounted on a rear lower portion of the frame, and a protective protrusion for protecting the unit of optical stereo cameras is formed on a rear upper portion of the frame.

Furthermore, the frame is made of hollow metal beams of different cross-sections welded together.

Furthermore, the accumulator battery is mounted on the frame using retractable slide rails.

The frame, as a part of the claimed utility model, is a structure welded from the hollow metal beams in order to distribute loads and ensure the necessary structural strength. The frame also allows the main components to be fixed, and the vertical elevation in the front portion thereof allows the body made of the radioparent material to be fixed, which, in its turn, is a protection for the front-, rear- and side-view cameras mounted on the frame. The arrangement of the cameras on the vertically elevated portion is caused by the need to install them in a place that provides maximum visibility of the environment, which makes it possible to eliminate the so-called "blind spots" that are presently inherent in cargo vehicles that use computer vision systems for automatic guidance.

The use of the radioparent material (for example, plastic, etc.) for the manufacture of the body of the module for installing service equipment is caused by the possibility of installing wireless information transmission facilities in this module, which allows remote control as well as dispatching for vehicle guidance to be implemented.

The on-board control computer, as a part of the body of the module for installing service equipment, allows for the collection and analysis of data received from the optical cameras and ultrasonic sensors, as a part of the robotized cargo vehicle, in order to monitor the environment and its own position, by detecting and recognizing obstacles, elements of road infrastructure (signs, pedestrian crossings, road blocks, etc.), segmenting the traffic-bearing surface, detecting road markings, which allows autonomous guidance of the robotized cargo vehicle to be implemented.

The use of the ultrasonic sensors in the structure makes it possible to significantly improve safety, since they provide detection of objects in the immediate vicinity of the robotized cargo vehicle, where the blind spots of the video cameras are located, and information is received from the video cameras with distance from the vehicle, where the coverage area of the ultrasonic sensors is minor.

The pneumatic and hydraulic nozzles are arranged towards the unit of optical stereo cameras and provide cleaning from rain, dust and other dirtying arising during the operation, which ensures safe movement, since visible noises are eliminated, which can lead to emergency situations during the functioning of the claimed utility model.

Furthermore, the protective protrusion is formed on the rear upper portion of the frame, which ensures a shift of an air rarefaction zone further from the unit of optical stereo cameras due to aerodynamic turbulence, which ensures the protection of the unit of optical stereo cameras arranged on the rear lower portion of the frame from dirt and damage.

The top-level controller, as a part of the body of the module for installing service equipment, monitors and controls the components of the robotized cargo vehicle, which are designed to supply on-board power (the accumulator battery, inverter) and drive it (the electric motor, driven active chassis).

The traction electric motor with the reduction gearbox are implemented with a mechanical characteristic of torque having a value that is sufficient to realize the traction force of the vehicle, which is the maximum possible for the adhesion of the driving wheels of the driven active chassis to the ground (to the surface of the traffic route).

The aforementioned features of both independent claim and dependent claims of this technical solution are in direct cause-and-effect relations with the technical result to be achieved, since their implementation ensures providing the robotized cargo vehicle characterized by ensuring safe movement based on the information received from the computer vision system and ultrasonic sensors, as well as the possibility of cleaning the video cameras using the pneumatic and hydraulic nozzles both in closed areas (in the territories of industrial enterprises) and on open public roads.

It is obvious to a person skilled in the art that it is possible to ensure greater accuracy in identifying objects as well as duplication of their functions in the event of failure of identical elements by varying the number of the video cameras and ultrasonic sensors.

The implementation of the feature characterized by the use of the retractable slide rails as a base for mounting the accumulator battery ensures pushing it out beyond the frame in order to implement the possibility of carrying out repair work without complete dismantling from the claimed technical solution.

The overall purpose of having the slide rails is to reduce worker skill requirements when installing and replacing the accumulator battery as well as to reduce the time required to install and replace the traction accumulator battery.

The essence of the claimed utility model is illustrated by the drawings.

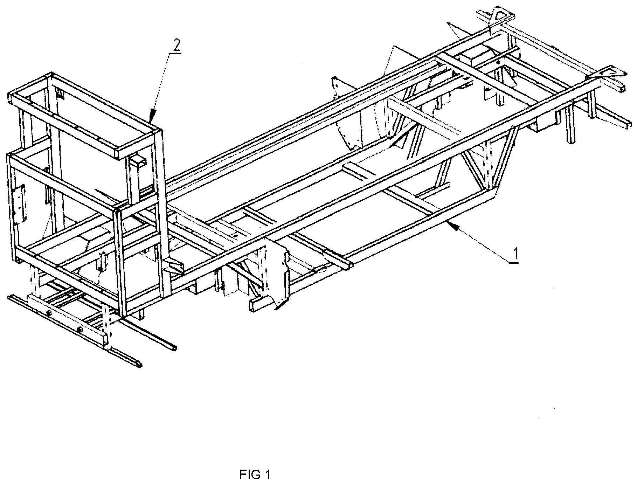

FIG. 1 shows the frame of the robotized cargo vehicle,

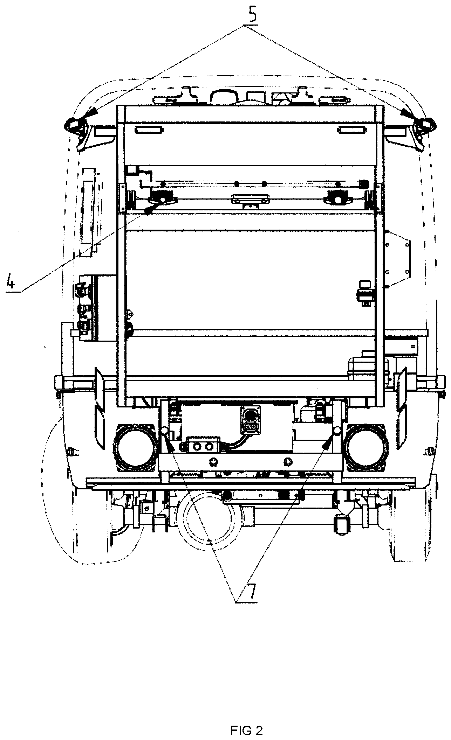

FIG. 2 illustrates a front view of the robotized cargo vehicle,

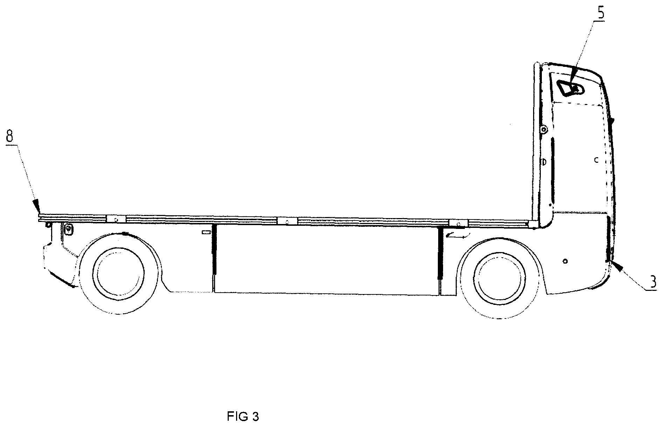

FIG. 3 shows a side view of the robotized cargo vehicle,

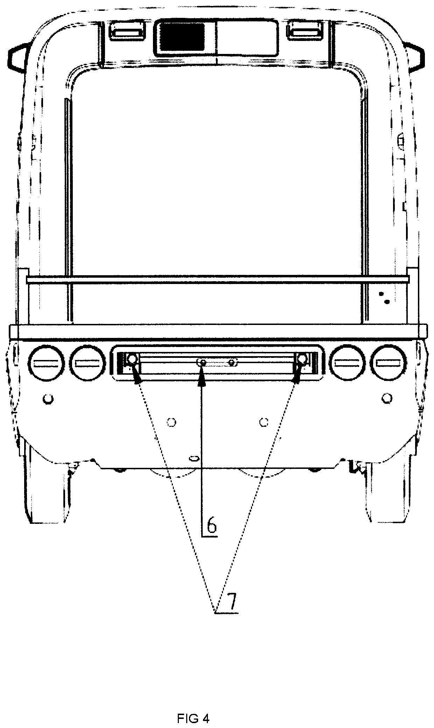

FIG. 4 depicts a rear view of the robotized cargo vehicle,

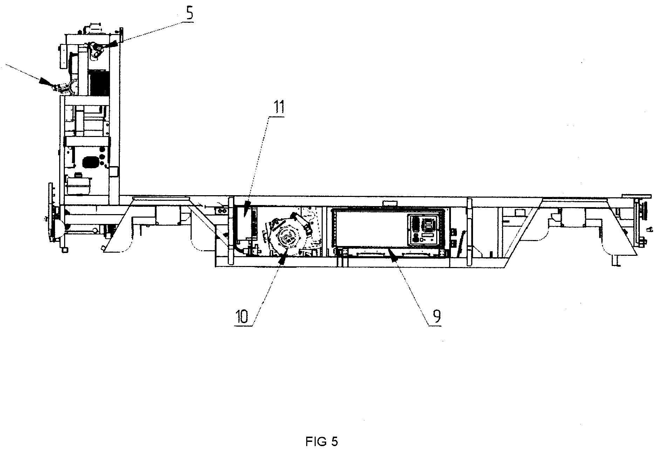

FIG. 5 illustrates a side view of the robotized cargo vehicle without an outer skin.

The robotized cargo vehicle comprises:
1) The frame;
2) The vertically elevated portion of the frame;
3) The body of the module for installing service equipment;
4) The unit of optical stereo cameras;
5) The optical cameras mounted on lateral portions of the body;
6) The unit of optical stereo cameras mounted in the rear lower portion of the frame;
7) The ultrasonic sensors (sonars);
8) The protective protrusion.
9) The accumulator battery;
10) The electric motor;
11) The inverter.

In the preferred embodiment of this technical solution, the relative position of the components of the robotized cargo vehicle is implemented as follows.

Ultrasonic sensors (7) are mounted in a front portion of the vertically elevated portion of the frame (2) on the body (3) of the module for installing service equipment, a unit of optical stereo cameras (4) is installed on the elevated portion of the frame. Four video cameras are installed in the unit with stereo cameras. Ultrasonic sensors (7) are also installed in the lateral portions of the body of the module for installing service equipment (3), one on each side, and two ultrasonic sensors (7) are installed in the rear lower portion of the frame (1). Optical rear-view cameras are arranged in two places: optical cameras (5) arranged at the top on the lateral portions of the body (3) of the robotized cargo vehicle, the cameras monitoring the environment and the condition of the cargo and its attachment to the cargo platform of the vehicle, and a unit of optical stereo cameras (6) is disposed in the rear lower portion of the frame (1).

The relative position of the structural elements of the claimed utility model, and namely the installation height of the unit of optical stereo cameras (4) and (6), the optical cameras (5) and the ultrasonic sensors (7), provides maximum visibility of the robotized (highly automated) vehicle, which makes it possible to completely eliminate the so-called "blind spots" that are presently inherent in all known cargo vehicles.

The unit of optical stereo cameras (6) is protected from splashes and dust during the operation of the robotized cargo vehicle with the protrusion (8) in the upper rear portion of the frame (1), which prevents the foreign matter from getting on the glass of the optical stereo cameras.

The accumulator battery (9) is arranged on special guides made in the form of the slide rails on rolling bearings. The guiding portion of the slide rails is attached to the central portion of the frame so that the accumulator battery itself can be pushed in and out through the left side of the claimed vehicle. At the same time, there are limiters on the slide rails, the limiters being mounted in the slide rails and performing the function of limiting the pushing of the traction accumulator battery out of the slide rails to carry out repair and maintenance of the traction accumulator battery itself without the complete dismantling from the claimed vehicle. The overall purpose of having the slide rails is to reduce the worker skill requirements when installing and replacing the traction accumulator battery as well as to reduce the time for its installation and replacement.

It is also obvious to the ones skilled in the art that, in addition to the described embodiment of the robotized cargo vehicle, other embodiments thereof are also possible on the basis of the features stated in the claims of the claimed utility model.

Thus, the robotized cargo vehicle device provides the possibility of safe movement of the robotized cargo vehicle due to the simultaneous use of the information received from the computer vision unit with the exception of the incorrect information received from the computer vision unit due to its dirtying and the ultrasonic sensors both in the closed areas (in the territories of industrial enterprises) and on open public roads.

## Claims

1. A robotized cargo vehicle, **characterized by** comprising a frame, a passive and a driven active chassis, an accumulator battery, an inverter, an electric motor and a reduction gearbox, wherein the frame is made with a vertically elevated portion, on which a service equipment module body made of a radioparent material is rigidly fastened, two ultrasonic sensors are mounted in a front lower portion of the body, and a unit of optical stereo cameras directed in a direction of travel and two cleaning pneumatic nozzles and two cleaning hydraulic nozzles directed at the unit of optical stereo cameras are mounted in an upper portion of the body on the frame, wherein an optical rear-view camera directed at an angle from a longitudinal axis of the robotized cargo vehicle is mounted on each lateral upper portion of the body, and one ultrasonic sensor is mounted in each lateral lower portion of the body, wherein an on-board control computer and a controller are mounted inside the body, the unit of optical stereo cameras and the two ultrasonic sensors are mounted on a rear lower portion of the frame, and a protective protrusion for protecting the unit of optical stereo cameras from dirt and damage is formed on a rear upper portion of the frame.

2. The robotized cargo vehicle according to claim 1, **characterized in that** the frame is made of hollow metal beams of different cross-sections welded together.

3. The robotized cargo vehicle according to claim 1, **characterized in that** the accumulator battery is mounted on the frame using retractable slide rails.
